# DEMANDE DE BREVET EUROPEEN

(11) **EP 4 844 992 A1**
(43) Date de publication de la demande: **25.11.2026**
(21) Numéro de dépôt: 26178030.8
(22) Date de dépôt: 11.05.2026
(51) Int. Cl.: H02K 3/02

(54) **MOTEUR SUPRACONDUCTEUR COMPORTANT UN ARRANGEMENT PARTICULIER DES BOBINES**

(30) Priorité: 21.05.2025 FR 2505452
(71) Demandeur: Airbus (S.A.S.), 31700 Blagnac (FR)
(72) Inventeur: COLLE, Alexandre, 31700 BLAGNAC (FR); DUNOYER, François, 31700 BLAGNAC (FR); CHAPER, Camille, 31700 BLAGNAC (FR); DORGET, Rémi, 31700 BLAGNAC (FR)
(74) Mandataire: Airbus-OPS SAS

(57) **Abrégé**

L'invention concerne un moteur supraconducteur comportant un rotor, un stator (112) traversé par un nombre pair d'orifices (116a-b), et pour chaque paire d'orifices (116a-b), une bobine (120) constituée d'un ruban (202) enroulé pour former plusieurs spires (204), où chacune présente une première section (204a) et une deuxième section (204b) qui traversent un orifice (116b), une troisième section (204c) et une quatrième section (204d) reliant les première et deuxième sections (204a-b), où dans l'un des orifices (116a), chaque première section (204a) présente une première face (203a) vers l'extérieur et où dans l'autre des orifices (116b), chaque deuxième section (204b) présente une deuxième face (203b) orientée vers l'extérieur et où l'ordre d'empilement des spires (204) de la première section (204a) est inversé par rapport à l'ordre d'empilement des spires (204) de la deuxième section (204b). Avec un tel arrangement, l'architecture du moteur supraconducteur est plus libre.

## Description

### DOMAINE TECHNIQUE

La présente invention se rapporte au domaine général des moteurs supraconducteurs. Elle concerne plus particulièrement un moteur supraconducteur comportant un arrangement particulier des bobines, un procédé de fabrication d'un tel moteur supraconducteur, ainsi qu'un aéronef comportant au moins un tel moteur supraconducteur.

### ÉTAT DE LA TECHNIQUE ANTÉRIEURE

Un moteur supraconducteur de l'état de la technique comporte un rotor et un stator réalisés dans un matériau ferromagnétique tel que l'ensemble des alliages de fer utilisés pour les machines électriques. Le stator est disposé à l'extérieur du rotor auquel est fixé rigidement l'arbre moteur dudit moteur supraconducteur qui est coaxial avec un axe longitudinal X.

Le rotor comporte des aimants permanents tandis que le stator présente en regard des aimants, des fentes réparties angulairement et régulièrement autour du rotor. Les fentes successives sont séparées par une dent et pour chaque paire de fentes, le stator comporte une bobine qui est enroulée et passe à travers les fentes.

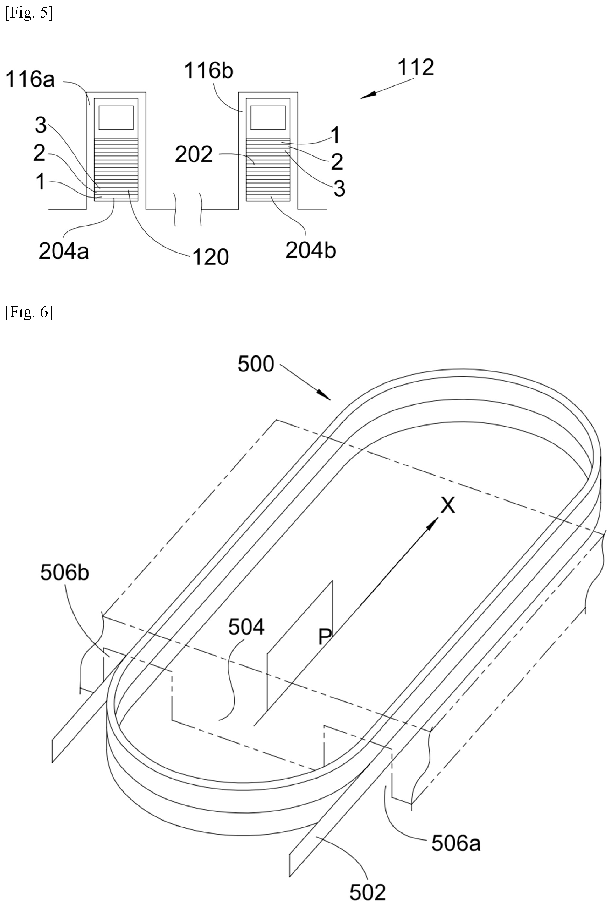

La Fig. 6 montre un exemple d'une bobine de l'état de la technique. La bobine 500 est constituée d'un ruban 502 en matériau supraconducteur qui est enroulé autour d'une dent 504 en passant d'une fente 506a à l'autre 506b de la paire.

Les sections du ruban 502 qui sont dans les fentes 506a-b, sont disposées parallèlement à un plan radial P passant par l'axe longitudinal X et à travers la dent 504 entre les fentes 506a-b.

Avec un tel arrangement, ces sections du ruban 502 sont arrangées perpendiculairement aux lignes de champs magnétiques qui sont à l'intérieur des fentes 506a-b. En outre, l'architecture du moteur supraconducteur est limitée car il n'est pas possible de déformer librement les bobines puisque le ruban ne peut s'arquer que selon une seule orientation, ici autour d'un axe radial par rapport à l'axe longitudinal X.

### EXPOSÉ DE L'INVENTION

Un objet de la présente invention est de proposer un moteur supraconducteur où chaque ruban présente une orientation différente par rapport au champ magnétique et permet une architecture plus libre du fait que l'arrangement particulier prévu permet à la bobine de se plier plus facilement.

Un objet de la présente invention est de proposer un moteur supraconducteur comportant :
- un rotor portant des aimants permanents et mobiles en rotation autour d'un axe longitudinal,
- un stator disposé à l'extérieur du rotor et traversé par un nombre pair d'orifices répartis angulairement et régulièrement autour du rotor, et
- pour chaque paire d'orifices, une bobine constituée d'un ruban en un matériau supraconducteur, où le ruban présente deux extrémités destinées à être alimentées électriquement, une première face et une deuxième face et où le ruban est enroulé sur lui-même pour former plusieurs spires, où chaque spire présente une première section rectiligne traversant un orifice de la paire, une deuxième section rectiligne traversant l'autre orifice de la paire, une troisième section courbe reliant entre elles, ladite première section et ladite deuxième section et une quatrième section courbe reliant entre elles, ladite deuxième section et une première section d'une autre spire, où dans l'un des orifices de la paire, chaque première section présente sa première face orientée vers l'extérieur et où dans l'autre des orifices de la paire, et chaque deuxième section présente sa deuxième face orientée vers l'extérieur et où l'ordre d'empilement des spires de la première section est inversé par rapport à l'ordre d'empilement des spires de la deuxième section.

Avec un tel arrangement, l'architecture du moteur supraconducteur est plus libre.

Avantageusement, le moteur supraconducteur comporte dans chaque orifice, un échangeur de chaleur arrangé entre un fond de l'orifice et la face de la section rectiligne en regard.

Avantageusement, les orifices associés à une même bobine sont séparés par une pluralité d'orifices associés à deux autres bobines.

Avantageusement, les sections courbes présentent une continuité de courbure sans formation d'angle

La présente invention a également pour objet un procédé de fabrication d'un moteur supraconducteur selon l'une des variantes précédentes, ledit procédé comportant les étapes :
- fourniture d'un stator traversé par un nombre pair d'orifices répartis angulairement et d'un rotor portant des aimants permanents,
- fourniture d'une bobine constituée d'un ruban en un matériau supraconducteur, où le ruban présente deux extrémités destinées à être alimentées électriquement, une première face et une deuxième face, et où le ruban est enroulé sur lui-même pour former plusieurs spires, où chaque spire présente une première section rectiligne, une deuxième section rectiligne, une troisième section courbe reliant entre elles, ladite première section et ladite deuxième section et une quatrième section courbe reliant entre elles, ladite deuxième section et une première section d'une autre spire,

- retournement d'une parmi la première section ou la deuxième section,
- mise en place de la première section dans un orifice de la paire,
- mise en place de la deuxième section dans l'autre orifice de la paire, et
- mise en place du stator à l'extérieur du rotor.

La présente invention a également pour objet un aéronef comprenant au moins un moteur supraconducteur selon l'invention.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un moteur supraconducteur selon l'invention,
Fig. 2 est une vue en coupe d'un moteur supraconducteur selon l'invention,
Fig. 3 est une vue en perspective d'une partie du moteur supraconducteur de la Fig. 1,
Fig. 4 est une vue en perspective d'un agrandissement de la Fig. 3,
Fig. 5 est une vue de détail de deux orifices d'une même paire, et
Fig. 6 est une vue en coupe d'un moteur supraconducteur de l'état de la technique.

### EXPOSÉ DÉTAILLÉ DE MODES DE RÉALISATION

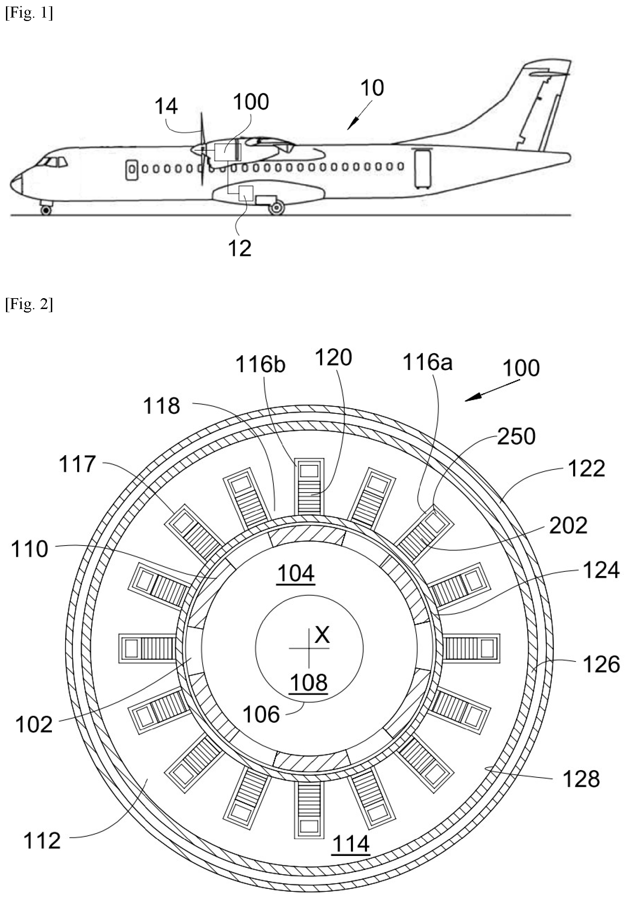

La Fig. 1 montre un aéronef 10 qui comporte un moteur supraconducteur 100 selon l'invention. Dans le mode de réalisation de l'invention représenté ici, une hélice 14 de l'aéronef 10 est fixée à l'arbre moteur 108 du moteur supraconducteur 100 qui est par ailleurs alimenté électriquement par un générateur électrique 12.

La Fig. 2 montre une coupe du moteur supraconducteur 100 selon l'invention vu en coupe par un plan perpendiculaire à l'axe longitudinal X. Le moteur supraconducteur 100 est globalement similaire à un moteur supraconducteur de l'état de la technique sauf en ce qui concerne les bobines 120.

Le moteur supraconducteur 100 comporte un rotor 102 qui est mobile en rotation autour d'un axe longitudinal X et qui présente un cœur de rotor 104 réalisé dans un matériau ferromagnétique tel que l'ensemble des alliages de fer utilisés pour les machines électriques.

Le cœur de rotor 104 est globalement cylindrique et présente un alésage central 106 dans lequel est emmanché et fixé rigidement l'arbre moteur 108 qui est coaxial avec l'axe de révolution du cœur de rotor 104, en superposition avec l'axe longitudinal X.

Le rotor 102 comporte également des aimants permanents 100 portés par le cœur de rotor 104. Il y a plusieurs aimants permanents 110 (ici au nombre de six) répartis angulairement et régulièrement en périphérie du cœur de rotor 104 et espacés les uns des autres. Classiquement, les aimants permanents 110 sont magnétisés radialement par rapport à l'axe longitudinal X et de manière alternée nord-sud de proche en proche.

Le moteur supraconducteur comporte un stator 112 qui est disposé autour du rotor 102 et qui comporte un cœur de stator 114 réalisé dans un matériau ferromagnétique tel que l'ensemble des alliages de fer utilisés pour les machines électriques. Le cœur de stator 114 prend une forme globalement cylindrique creuse coaxiale avec l'axe longitudinal X.

Le cœur de stator 114 est traversé par un nombre pair d'orifices 116 (ici au nombre de seize) répartis angulairement et régulièrement autour du rotor 102. Deux orifices successifs 116a-b sont séparés par une dent 118 monobloc et monomatière avec le cœur de stator 114. Les orifices 116a-b sont ici ouvertes en face du rotor 102 et prennent la forme de fentes, mais chaque orifice 116a-b peut également être fermé en face du rotor 102 et prendre la forme d'un tunnel. Les orifices 116a-b s'étendent parallèlement à l'axe longitudinal X.

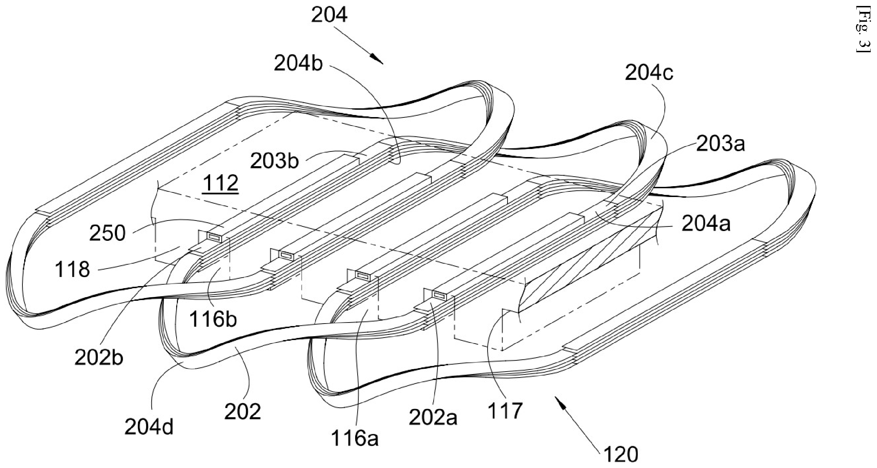

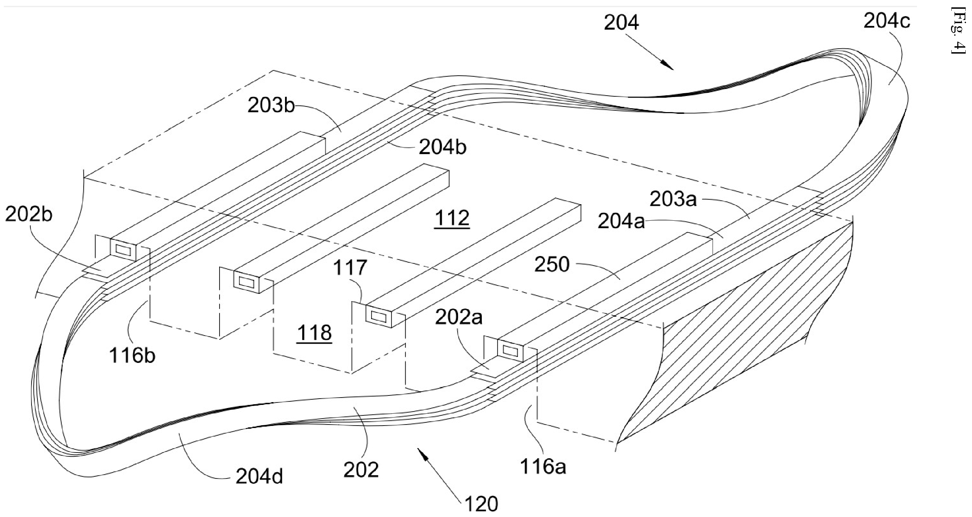

Pour chaque paire d'orifices 116a-b, le moteur supraconducteur 100 comporte une bobine 120 portée par le cœur de stator 114 dans les orifices 116a-b et en face des éléments permanents 110. La Fig. 3 montre un groupe de trois bobines 120 et la Fig. 4 montre une bobine 120. Sur les Figs. 3 et 4, le stator 112 est représenté en traits fantômes.

Chaque bobine 120 est constituée d'un ruban 202 en matériau supraconducteur.

Lorsqu'il est déroulé, le ruban 202 présente une longueur entre ses deux extrémités 202a-b ainsi qu'une épaisseur réduite. Le ruban 202 présente une première face 203a et une deuxième face 203b qui sont d'une certaine largeur.

Le ruban 202 est enroulé sur lui-même pour former plusieurs spires 204 et lorsqu'il est enroulé et mis en place, le ruban 202 est alimenté électriquement à partir de ses deux extrémités 202a-b qui sont connectées au générateur électrique 12.

Chaque spire 204 de la bobine 120 présente une première section 204a rectiligne traversant un orifice 116a de la paire d'orifices 116a-b associée à ladite bobine 120 et une deuxième section 204b rectiligne traversant l'autre orifice 116b de la même paire.

Chaque spire 204 de la bobine 120 présente également une troisième section 204c courbe reliant entre elles, la première section 204a de la spire 204 et ladite deuxième section 204b de la spire 204 et une quatrième section 204d courbe reliant entre elles, ladite deuxième section 204b de la spire 204 et une première section 204a d'une autre spire de la même bobine 120.

Dans l'un des orifices 116a de la paire d'orifices 116a-b associée à la bobine 120, chaque première section 204a présente sa première face 203a orientée vers l'extérieur et donc sa deuxième face 203b vers l'intérieur, et dans l'autre des orifices 116b de la même paire, chaque deuxième section 204b présente sa deuxième face 203b orientée vers l'extérieur et donc sa première face 203a vers l'intérieur.

Les sections 204c-d courbes sont disposées à l'extérieur des orifices 116a-b.

Chaque face 203a-b est agencée dans un plan orthoradial par rapport à l'axe longitudinal X et chaque face 203a-b est alors orientée vers l'intérieur, c'est-à-dire vers l'axe longitudinal X ou vers l'extérieur, c'est-à-dire à l'opposé de l'axe longitudinal X et donc vers l'extérieur du moteur supraconducteur 100.

Comme le montre plus clairement la Fig. 5, l'ordre d'empilement des spires 204 de la première section 204a est inversé par rapport à l'ordre d'empilement des spires 204 de la deuxième section 204b. Par exemple, ici, les spires 1, 2 et 3 qui sont vers le centre du stator 112 dans l'orifice 116a se retrouvent vers l'extérieur dans l'orifice 116b. On a donc un retournement global de toutes les spires d'une des parties rectilignes et la superposition en sens inverse améliore le refroidissement des bobines 120. Le retournement consiste en un basculement de 180° autour de l'axe longitudinal de la partie rectiligne considérée. La bobine est déformée de manière à obtenir ce basculement sans créer de rupture dans la courbure, sans former d'angle, en assurant une continuité de courbure.

En inversant l'orientation des sections 204a-b rectilignes entre les deux orifices 116a-b, les sections 204c-d courbes présente un enroulement qui apporte de la souplesse et permet d'adapter la forme de la bobine 120 en fonction des besoins et assure une plus grande liberté dans l'architecture du moteur supraconducteur 100.

En outre, avec un tel arrangement, les sections 204a-b rectilignes sont arrangées parallèlement aux lignes de champs magnétiques qui sont à l'intérieur des orifices 116a-b ce qui permet une réduction des pertes par rapport à des rubans qui seraient placés radialement.

Chaque bobine 120 est ainsi constituée d'un empilement de rubans 202 et entre deux rubans 202, une couche d'un isolant électrique est insérée.

Dans le mode de réalisation de l'invention présenté ici, le rotor 102 et le stator 112 sont logés dans un boîtier moteur 122 qui est cylindrique et fermé à ses deux extrémités par des flancs dont au moins un est percé d'un orifice central permettant le passage de l'arbre moteur 108. Le stator 112 est monté fixe à l'intérieur du boîtier moteur 122 tandis que le rotor 102 et l'arbre moteur 108 sont montés libres en rotation à l'intérieur du boîtier moteur 122.

En fonctionnement, chaque bobine 120 est alimentée électriquement par un courant alternatif pour générer un champ magnétique qui interagit avec les aimants permanents 110 pour les entraîner en rotation avec le rotor 102 et l'arbre moteur 108. Pour chaque bobine 120, l'alimentation électrique s'effectue depuis ses extrémités 202a-b.

Le moteur supraconducteur 100 comporte également ici, un cylindre intérieur 124 et un cylindre extérieur 126 qui sont coaxiaux avec l'axe longitudinal X.

Le cylindre intérieur 124 est disposé entre le rotor 102 et le stator 112 et le cylindre extérieur 126 est disposé autour du stator 112 et à l'intérieur du boîtier moteur 122.

Le cylindre intérieur 124 et le cylindre extérieur 126 s'étendent entre les deux flancs auxquels ils sont fixés hermétiquement pour délimiter entre eux (les deux cylindres intérieur 124 et extérieur 126) et les deux flancs, une chambre 128 dans laquelle est logé le stator 112 et qui peut être mise au vide.

Pour assurer le refroidissement des bobines 120, le moteur supraconducteur 100 comporte dans chaque orifice 116a-b, un échangeur de chaleur 250 qui est arrangé entre un fond 117 de l'orifice 116a-b et la face 203a-b de la section 204a-b rectiligne qui est en regard dudit fond 117. Le fond 117 est la paroi de l'orifice 116a-b qui est disposé dans un plan orthoradial et qui est orienté vers l'extérieur, c'est-à-dire à l'opposé de l'axe longitudinal X et du rotor 102.

L'échangeur de chaleur 250 prend ici la forme d'une canalisation qui fait partie d'un circuit réfrigérant dans lequel circule un fluide caloporteur. Le circuit réfrigérant comporte par exemple un réservoir pour le fluide caloporteur et une pompe pour mettre le fluide caloporteur en circulation.

La mise en place de l'échangeur de chaleur 250 contre une face du ruban 202 assure un meilleur transfert des calories du fait de la plus grande surface d'échange.

Du fait de la plus grande souplesse des bobines 120, il est possible de disposer les bobines 120 dans des orifices 116a-b non consécutifs. Par exemple, les orifices 116a-b associés à une même bobine 120 sont séparés par une pluralité d'orifices 116a-b (ici deux) associés à deux autres bobines 120. Grâce à la flexibilité des sections 204c-d courbes, il est possible de faire passer ces sections 204c-d courbes les unes au-dessus des autres sans contact.

Un tel arrangement éloignant les sections 204a-b rectilignes d'une même bobine 120 permet une conversion électro-mécanique plus importante (c'est-à-dire permet d'obtenir plus de puissance mécanique) avec la même quantité de courant électrique en entrée, par rapport à une configuration où les orifices 116a-b associés à une bobine 120 seraient voisins.

Un procédé de fabrication du moteur supraconducteur 100 comporte les étapes :
- fourniture du stator 112 et du rotor 102,
- fourniture de la bobine 120 constituée du ruban 202,
- déformation de la bobine de manière à retourner une parmi la première section 204a ou la deuxième section 204b,
- mise en place de la première section 204a dans un orifice 116a de la paire,
- mise en place de la deuxième section 204b dans l'autre orifice 116b de la paire, et
- mise en place du stator 112 à l'extérieur du rotor 102.

La bobine 120 avec les différentes sections 204a-d est ainsi fournie avec toutes les spires 204 et c'est une partie rectiligne complète avec toutes les premières sections 204a ou toutes les deuxièmes sections 204b qui sont retournées en même temps.

## Revendications

1. Moteur supraconducteur (100) comportant :
- un rotor (102) portant des aimants permanents (110) et mobiles en rotation autour d'un axe longitudinal (X),
- un stator (112) disposé à l'extérieur du rotor (102) et traversé par un nombre pair d'orifices (116a-b) répartis angulairement et régulièrement autour du rotor (102), et
- pour chaque paire d'orifices (116a-b), une bobine (120) constituée d'un ruban (202) en un matériau supraconducteur, où le ruban (202) présente deux extrémités (202a-b) destinées à être alimentées électriquement, une première face (203a) et une deuxième face (203b), et où le ruban (202) est enroulé sur lui-même pour former plusieurs spires (204), où chaque spire (204) présente une première section (204a) rectiligne traversant un orifice (116a) de la paire, une deuxième section (204b) rectiligne traversant l'autre orifice (116b) de la paire, une troisième section (204c) courbe reliant entre elles, ladite première section (204a) et ladite deuxième section (204b) et une quatrième section (204d) courbe reliant entre elles, ladite deuxième section (204b) et une première section (204a) d'une autre spire (204), où dans l'un des orifices (116a) de la paire, chaque première section (204a) présente sa première face (203a) orientée vers l'extérieur et où dans l'autre des orifices (116b) de la paire, chaque deuxième section (204b) présente sa deuxième face (203b) orientée vers l'extérieur et où l'ordre d'empilement des spires (204) de la première section (204a) est inversé par rapport à l'ordre d'empilement des spires (204) de la deuxième section (204b).

2. Moteur supraconducteur (100) selon la revendication 1, **caractérisé en ce qu'**il comporte dans chaque orifice (116a-b), un échangeur de chaleur (250) arrangé entre un fond (117) de l'orifice (116a-b) et la face (203a-b) de la section (204a-b) rectiligne en regard.

3. Moteur supraconducteur (100) selon l'une des revendications 1 ou 2, **caractérisé en ce que** les orifices (116a-b) associés à une même bobine (120) sont séparés par une pluralité d'orifices (116a-b) associés à deux autres bobines (120).

4. Moteur supraconducteur (100) selon l'une des revendications 1 à 3, **caractérisé en ce que** les sections courbes (204c, 204d) présentent une continuité de courbure sans formation d'angle.

5. Procédé de fabrication d'un moteur supraconducteur (100) selon l'une des revendications 1 à 3, ledit procédé comportant les étapes :
- fourniture d'un stator (112) traversé par un nombre pair d'orifices (116a-b) répartis angulairement et d'un rotor (102) portant des aimants permanents (110),
- fourniture d'une bobine (120) constituée d'un ruban (202) en un matériau supraconducteur, où le ruban (202) présente deux extrémités (202a-b) destinées à être alimentées électriquement, une première face (203a) et une deuxième face (203b), et où le ruban (202) est enroulé sur lui-même pour former plusieurs spires (204), où chaque spire (204) présente une première section (204a) rectiligne, une deuxième section (204b) rectiligne, une troisième section (204c) courbe reliant entre elles, ladite première section (204a) et ladite deuxième section (204b) et une quatrième section (204d) courbe reliant entre elles, ladite deuxième section (204b) et une première section (204a) d'une autre spire (204),
- déformation de la bobine de manière à retourner une parmi la première section (204a) ou la deuxième section (204b),
- mise en place de la première section (204a) dans un orifice (116a) de la paire,
- mise en place de la deuxième section (204b) dans l'autre orifice (116b) de la paire, et
- mise en place du stator (112) à l'extérieur du rotor (102).

6. Aéronef (10) comprenant au moins un moteur supraconducteur (100) selon l'une des revendications précédentes.
